(19) Europäisches Patentamt

European Patent Office

Office européen des brevets

(11) **EP 1 424 349 A1**

(12) **EUROPEAN PATENT APPLICATION**
published in accordance with Art. 158(3) EPC

(43) Date of publication:
**02.06.2004 Bulletin 2004/23**

(21) Application number: **02762805.6**

(22) Date of filing: **19.08.2002**

(51) Int Cl.[7]: **C08F 210/02**, C08F 297/08, C08J 5/18

(86) International application number:
**PCT/JP2002/008344**

(87) International publication number:
**WO 2003/016366 (27.02.2003 Gazette 2003/09)**

(84) Designated Contracting States:
**AT BE BG CH CY CZ DE DK EE ES FI FR GB GR IE IT LI LU MC NL PT SE SK TR**

(30) Priority: **17.08.2001 JP 2001247889**
**20.08.2001 JP 2001248838**
**20.08.2001 JP 2001248839**

(71) Applicant: **IDEMITSU PETROCHEMICAL CO., LTD.**
**Tokyo 130-0015 (JP)**

(72) Inventors:
• **OHTA, Katsutoshi**
**Ichihara-shi, Chiba 299-0107 (JP)**

• **HIGUCHI, Hiroyuki**
**Ichihara-shi, Chiba 299-0107 (JP)**
• **FUJIKAWA, Shinjiro**
**Ichihara-shi, Chiba 299-0107 (JP)**
• **SHINOHARA, Masayuki**
**Ichihara-shi, Chiba 299-0107 (JP)**

(74) Representative:
**Gille Hrabal Struck Neidlein Prop Roos**
**Patentanwälte,**
**Brucknerstrasse 20**
**40593 Düsseldorf (DE)**

(54) **ETHYLENIC COPOLYMER AND FILM COMPRISING THE SAME**

(57)    The ethylene base copolymer of the present invention having a density d falling in a range of 940 to 970 kg/m$^3$, a polydispersion index PDI falling in a range of 25 to 50 and a long chain branch index LCBI falling in a range of 0.6 to 2.0 has a high impact strength and few fish eyes and is excellent in a high extruding characteristic, a high-speed moldability, a bubble stability and a tear strength in molding, and it can be produced via at least two steps of reaction by a slurry polymerization method using a Ziegler catalyst.

**Description**

BACKGRAOUND OF THE INVENTION

The present invention relates to an ethylene base copolymer suited for producing a film and a film comprising the same, more specifically to polyethylene for a film in which an impact strength is high and fish eyes (FE) are few and which is excellent in a high extruding characteristic, a high-speed moldability, a bubble stability and a tear strength in molding and the same film.

RELATED ART

A film obtained by molding a high density polyethylene base resin, particularly a film obtained by subjecting it to inflation molding is excellent in mechanical characteristics such as an impact resistance and a tensile strength, and therefore it is used for various packaging films such as a shopping bag and protecting films in large quantities.

This inflation molding method is a method in which high density polyethylene is extruded in a molten state from an annular dice in an annular form and in which it is solidified by air-cooling while inflating by internal pressure and continuously rolled. In such inflation molding, further higher speed is desired in order to secure a high productivity. A film thus produced is air-delivered to a bag-producing step and processed into shopping bags and the like. In this case, if the film has a small rigidity, it is slackened in air-delivering to result in inferior bag production in a certain case, so that a large rigidity is required to a film.

If high-speed molding is carried out in air-cooling inflation molding in order to meet these requirements, an amount of cooling air for cooling and solidifying a molten bubble has to be increased, and the molten bubble becomes instable. As a result thereof, the molten bubble becomes locally compressed, so that it is difficult to control an unequal thickness of the film. Further, high-speed molding brings about the problem that the film is cut by drawing. An increase in a molecular weight of a polyethylene resin makes it possible to solve these problems to a certain extent, but there has been the problem that the extrusion characteristic is lowered.

A bubble stabilizer is usually used in order to prevent shaking of a molten bubble caused by increasing an amount of cooling air (for example, Japanese Patent Publication No. 2180/1980), but it is not satisfactory. Proposed as well is a method in which modified is a polyethylene resin produced with a chromium base catalyst (Japanese Patent Application Laid-Open No. 90633/1996). In this modifying method, however, polyethylene of a high molecular weight is formed by cross-linking reaction, and as a result thereof, caused are not only problems on a reduction in a discharge amount and an increase in a load on a motor by an increase in a viscosity of polyethylene but also the problem that fish eyes are produced on the film by formation of a high molecular weight component to markedly deteriorate the quality of the film.

An inhibition of an elastic effect of a polymer is given as one method for preventing cutting caused by drawing in high-speed drawing (Plastics, Vol. 37, No. 2, p. 48 to 63). Narrowing of molecular weight distribution is effective therefor, but there are the problems that the extruding characteristic is reduced and that simple broadening of molecular weight distribution results in increasing fish eyes (FE).

It is considered to increase a receiving speed to strengthen aligning in an MD direction (raising a rigidity in an MD direction) as a method for preventing slackening in air-delivering, but there has been the problem that the tear strength in an MD direction is reduced.

If a polyethylene resin is increased in a density, the resulting film is increased in a rigidity, and therefore slackening is inhibited, but the impact resistance is reduced.

DISCLOSURE OF THE INVENTION

Under such circumstances, an object of the present invention is to provide a polyethylene base resin for a film which has a high impact strength and has particularly less fish eyes (FE) and which is excellent in a high extruding characteristic, a high-speed moldability, a bubble stability and a tear strength and an inflation film using the same as a base material which is excellent in balance between the physical properties described above.

Intensive researches repeated by the present inventors in order to achieve the object described above have resulted in finding that a polyethylene base resin having the characteristics described above and an inflation film having an excellent balance between physical properties are provided by an ethylene base copolymer which is produced by a multistage slurry polymerization method using a Ziegler catalyst, which has a density d falling in a range of 940 to 970 $kg/m^3$ and a polydispersion index PDI falling in a range of 25 to 50 and in which any of a creep distortion $\gamma_0$, a critical shear stress and a long chain branch index LCBI falls in a specific range, and thus they have reached the present invention.

That is, the present invention provides an ethylene base copolymer, a production process for the same and an inflation film each described below.

[1] An ethylene base copolymer having a density d falling in a range of 940 to 970 kg/m$^3$, a polydispersion index PDI falling in a range of 25 to 50 and a creep distortion $\gamma_0$ of 100 % or less.

[2] An ethylene base copolymer having a density d falling in a range of 940 to 970 kg/m$^3$, a polydispersion index PDI falling in a range of 25 to 50 and a critical shear stress of 0.21 MPa or more.

[3] An ethylene base copolymer having a density d falling in a range of 940 to 970 kg/m$^3$, a polydispersion index PDI falling in a range of 25 to 50 and a long chain branch index LCBI falling in a range of 0.6 to 2.0.

[4] An ethylene base copolymer having a density d falling in a range of 940 to 970 kg/m$^3$, a polydispersion index PDI falling in a range of 25 to 50, a creep distortion $\gamma_0$ of 100 % or less, a critical shear stress of 0.21 MPa or more and a long chain branch index LCBI falling in a range of 0.6 to 2.0.

[5] The ethylene base copolymer as described in any of the above items [1] to [4], wherein a boiling hexane-soluble component amount is 1.0 % by weight or less.

[6] The ethylene base copolymer as described in any of the above items [1] to [5], wherein a relation of an amount Y (% by weight) of a component having an elution temperature of 90°C or lower obtained by a cross fraction method and a molecular weight of 50,000 or more with a density d (kg/m$^3$) satisfies the following equation:

$$\log Y \geqq 56.80 - 0.0595d$$

[7] A production process for the ethylene base copolymer as described in any of the above items [1] to [6], wherein it is produced via at least two continuous steps by a slurry polymerization method using a Ziegler catalyst.

[8] The production process for the ethylene base copolymer as described in the above item [7], wherein it is produced by continuous polymerization of two or more kinds of polyethylenes, and polyethylene produced at the first step has a melting enthalpy $\Delta H$ of 200 J/g or more and a molecular weight distribution (weight average molecular weight Mw/number average molecular weight Mn) of 5 to 30.

[9] The production process for the ethylene base copolymer as described in the above item [7] or [8], wherein it is produced by introducing the powdery polyethylene resin obtained by polymerization into an extruding machine without being exposed even once to the air.

[10] The production process for the ethylene base copolymer as described in the above item [9], wherein the extruding machine is a dual shaft screw extruding machine.

[11] The production process for the ethylene base copolymer as described in any of the above items [7] to [10], wherein an antioxidant is added to the powdery polyethylene resin in a proportion of 4000 ppm or less.

[12] A film obtained by subjecting the ethylene base copolymer as described in any of the above items [1] to [6] to inflation molding.

BEST MODE FOR CARRYING OUT THE INVENTION

In the ethylene base copolymer (I) of the present invention, (1) a density d falls in a range of 940 to 970 kg/m$^3$; (2) a polydispersion index PDI falls in a range of 25 to 50; (3) a creep distortion $\gamma_0$ is 100 % or less; and it is preferred that (4) a boiling hexane-soluble component amount is 1.0 % by weight or less and that (5) a relation of an amount Y (% by weight) of a component having an elution temperature of 90°C or lower obtained by a cross fraction method and a molecular weight of 50,000 or more with a density d (kg/m$^3$) satisfies the following equation:

$$\log Y \geqq 56.80 - 0.0595d$$

The above ethylene base copolymer has preferably (6) a melt flow rate MFR$_5$ of 0.05 to 2.00g/10 minute.

The respective items shall be explained below.

(1) Density

In the ethylene base copolymer (I) according to the present invention, a density measured according to ASTM D-1505 (1998) falls in a range of 940 to 970 kg/m$^3$, preferably 945 to 965 kg/m$^3$ and more preferably 945 to 960 kg/m$^3$. If the above density is less than 940 kg/m$^3$, a rigidity of the film is lowered, and if it exceeds 970 kg/m$^3$, an impact strength of the film is reduced. A sample used for measuring the density is prepared according to ASTM D-2839.

(2) Polydispersion index PDI

The ethylene base copolymer (I) according to the present invention has a polydispersion index PDI falling in a range of 25 to 50, preferably 25 to 45 and more preferably 25 to 40. If the polydispersion index PDI is less than 25, the extruding characteristic is lowered, and if it exceeds 50, an impact resistance of the film is reduced to a large extent. In this case, the polydispersion index PDI is determined by the following method:

The sample is molten at 190°C in 3 minutes and degassed for 30 minutes, and then a sample piece having a thickness of about 1 mm is prepared by compression molding. After cooling, this sample piece is interposed between two flat plates and provided with dynamic distortion on the conditions of a temperature of 190°C, a distortion $\gamma$ of 15 % and a gap of 1.15 mm between the flat plates by means of ARES manufactured by Rheometrics Co., Ltd. to determine a frequency dependency of a storage elastic modulus G'. When a frequency in which the storage elastic modulus G' gives $3.0 \times 10^3$ Pa is set to $\omega_1$ (sec$^{-1}$) and a frequency in which the storage elastic modulus G' gives $1.0 \times 10^5$ Pa is set to $\omega_2$ (sec$^{-1}$), the polydispersion index PDI is defined by $\omega_2/(10\omega_1)$.

(3) Creep distortion $\gamma_0$

The ethylene base copolymer (I) according to the present invention has a creep distortion $\gamma_0$ of 100 % or less, preferably 10 to 100 % and particularly preferably 20 to 80 %. If it exceeds 100 %, a strength of the film is reduced. A creep distortion $\gamma_0$ is distortion caused for a certain time under a fixed stress, and it shows that the larger this value is, the more easily the deformation is caused under a fixed stress. Accordingly, the larger the creep distortion $\gamma_0$ is, the larger the alignment of a polyethylene molecular chain in the inflation film is, and the more the film strength is reduced. The creep distortion $\gamma_0$ may be 100 % or less, and if it is less than 10 %, the moldability is likely to be lowered.

In this case, the creep distortion $\gamma_0$ is measured by the following method. That is, the sample is molten at 190°C in 3 minutes and degassed for 30 minutes, and then a sample piece having a thickness of about 1 mm is prepared by compression molding. After cooling, this sample piece is measured by means of RSR (rheometric stress rheometer) manufactured by Rheometrics Co., Ltd. In respect to the measuring conditions, a plate & plate (diameter 25 mm) is used to apply a fixed stress of 200 Pa on the sample, and then a distortion after 2000 seconds is measured.

(4) Boiling hexane-soluble component amount

As described above, the ethylene base copolymer (I) of the present invention has preferably (1) a density d falling in a range of 940 to 970 kg/m$^3$, (2) a polydispersion index PDI falling in a range of 25 to 50 and (3) a creep distortion $\gamma_0$ of 100 % or less, and it has further preferably a boiling hexane-soluble component amount of 1.0 % by weight or less, more preferably 0.9 % by weight or less and particularly preferably 0.8 % by weight or less. If it exceeds 1.0 % by weight, the impact resistance is reduced in a certain case.

This soluble amount is a value determined by the following method. That is, the pelletized ethylene base copolymer is crushed to a maximum length of 2 mm or less by means of a crusher equipped with a rotary cutter. The crushed matter about 3 g thus obtained is used and subjected to Soxhlet extraction for 6 hours with boiling hexane while controlling refluxing time so that siphon phenomenon is caused in a proportion of about once/minute. After finishing the extraction, remaining polyethylene is dried t 70°C for 3 hours, and it is cooled down to room temperature and then weighed. The weights of the ethylene base copolymer before and after the extraction are set to $W_1$ and $W_2$ respectively, and the boiling hexane-soluble component amount (% by weight) is shown by a value of $(W_1 - W_2)/W_1 \times 100$.

(5) Amount of a component having an elution temperature of 90°C or lower and a molecular weight of 50,000 or more

In the ethylene base copolymer (I) of the present invention, a relation of an amount Y (% by weight) of a component having an elution temperature of 90°C or lower obtained by a cross fraction method and a molecular weight of 50,000 or more obtained by the cross fraction method with a density d (kg/m$^3$) satisfies preferably the following equation:

$$\log Y \geqq 56.80 - 0.0595d$$

If an amount Y of the above component is smaller than this range, balance between the rigidity and the impact strength is lowered.

More preferably $\log Y \geqq 56.95 - 0.0595d$,
further preferably $\log Y \geqq 57.10 - 0.0595d$ and

particularly preferably log Y≧57.25 - 0.0595d.

Further, log Y is preferably (57.80 - 0.0595d) or less in order to more improve the moldability, particularly a moldability of an inflation film.

In this case, the cross fraction method is a method for determining a correlation between molecular weight - eluting temperature - eluting amount determined by temperature programming elution fractionation and gel permeation chromatography (GPC).

Column for temperature programming elution fractionation: Chromosolve P (30/60 mesh)-filled column (4.6 mmφ × 150 mm)

GPC column: TSK-GEL GMHHR-H (20)(manufactured by TOSO Corporation), 7.8 mmφ × 300 mm, 2 columns, constant temperature of 140°C

Solvent: o-dichlorobenzene

Measuring procedure:

A solvent 10 ml is added to 30 mg of the sample, and it is dissolved by stirring at 140°C for one hour. This sample solution is filled into a column at 135°C and maintained for one hour, and it is cooled down to 10°C at 10°C/ hour. The column was maintained at 10°C for 30 minutes or longer, and then a fraction eluted at 10°C was passed through a GPC column at flow velocity of 1.0 ml/minute to measure an intensity of transmitted light in a wavelength of 3.41 μm by means of an IR detector installed in an outlet of the column. Then, the temperature is elevated in stages to 30°C, 50°C, 60°C, 70°C, 80°C, 90°C, 92°C, 96°C, 98°C, 100°C, 103°C, 106°C, 108°C, 110°C, 113°C, 115°C and 135°C, and the eluted components at the respective temperatures are measured in the same manner. Conversion of eluted volume - molecular weight in GPC is carried out by universal calibration.

(6) Melt flow rate $MFR_5$ (g/10 minute)

A melt flow rate $MFR_5$ of the ethylene base copolymer (I) of the present invention may suitably be selected according to the situations, and it is preferably 0.05 to 2.00 g/10 minute, particularly preferably 0.10 to 1.00 g/10 minute. If the $MFR_5$ is less than 0.05 g/10 minute, the fluidity and the moldability are unsatisfactory in a certain case, and if it exceeds 2.00 g/10 minute, the impact resistance is likely to be reduced. In this case, the $MFR_5$ is a value converted to an extruded amount per 10 minutes, and the extruded amount is measured at a temperature of 190°C and a load of 5 kg according to JIS K-7210.

In the ethylene base copolymer (II) of the present invention, (1) a density d falls in a range of 940 to 970 kg/ $m^3$; (2) a polydispersion index PDI falls in a range of 25 to 50; (3) a critical shear stress is 0.21 MPa or more; and it is preferred that (4) a boiling hexane-soluble component amount is 1.0 % by weight or less and that (5) a relation of an amount Y (% by weight) of a component having an elution temperature of 90°C or lower obtained by a cross fractionation method and a molecular weight of 50,000 or more with a density d ($kg/m^3$) satisfies the following equation:

$$\log Y \geqq 56.80 - 0.0595d$$

The above ethylene base copolymer has preferably (6) a melt flow rate $MFR_5$ of 0.05 to 2.00g/10 minute.

The respective items shall be explained below. However, explanations on the same items as described above shall be omitted.

(3) Critical shear stress $\sigma_c$

The ethylene base copolymer (II) according to the present invention has a critical shear stress $\sigma_c$ of 0.21 MPa or more, preferably 0.23 MPa or more and particularly preferably 0.23 to 0.50 MPa. If it is less than 0.21 MPa, the bubble stability in inflation molding is reduced.

The critical shear stress $\sigma_c$ is an index showing instable flow of an extruded matter when extruding a molten resin from a dice, and the larger value shows that instability is less liable to be caused when the molten resin is extruded at a high speed (for example, irregularities are less liable to be produced on the surface of the molten resin). That is, if the critical shear stress $\sigma_c$ is too small, irregularities are produced on the surface of a molten polyethylene resin extruded from an inflation molding machine, and as a result thereof, drawing becomes unequal at a blow-up step in inflation molding, so that shaking of a bubble becomes heavy.

In this case, the critical shear stress $\sigma_c$ is measured by the following method. That is, an orifice (L/D = 50 mm/ 1.2 mm, inlet angle (2θ) 90°) is installed to Capillograph manufactured by Toyo Seiki Co., Ltd., and a barrel (diameter: 9.55 mm) is heated up to 200°C and maintained. The barrel is charged with a sample and equipped with a piston, and it is degassed and pre-heated for 6 minutes. After pre-heating, the sample is extruded at the respective piston speeds of 3, 5, 7.5, 10, 15, 20, 30, 50, 75, 100, 150, 200, 300 and 500 (mm/minute), and the surfaces of the strands extruded are observed. The surfaces of the strands are smooth at the low piston speeds, but when the piston speed is raised, an area where a smooth part and a rough part appear repeatedly on the strand surface appears at some speed. An apparent shear stress at the maximum piston speed at which this periodical surface roughness does not appear is defined as the critical shear stress $\sigma_c$.

(4) Boiling hexane-soluble component amount

As described above, the ethylene base copolymer (II) of the present invention has preferably (1) a density d falling in a range of 940 to 970 kg/m$^3$, (2) a polydispersion index PDI falling in a range of 25 to 50 and (3) a critical shear stress $\sigma_c$ of 0.21 MPa or more, and it has further preferably a boiling hexane-soluble component amount of 1.0 % by weight or less, more preferably 0.9 % by weight or less and particularly preferably 0.8 % by weight or less. If it exceeds 1.0 % by weight or less, the impact resistance is reduced in a certain case. This soluble amount is a value determined by the method described above.

In the ethylene base copolymer (III) of the present invention, (1) a density d falls in a range of 940 to 970 kg/m$^3$; (2) a polydispersion index PDI falls in a range of 25 to 50; (3) a long chain branch index LCBI falls in a range of 0.6 to 2.0; and it is preferred that (4) a boiling hexane-soluble component amount is 1.0 % by weight or less and that (5) a relation of an amount Y (% by weight) of a component having an elution temperature of 90°C or lower obtained by a cross fractionation method and a molecular weight of 50,000 or more with a density d (kg/m$^3$) satisfies the following equation:

$$\log Y \geqq 56.80 - 0.0595d$$

The above ethylene base copolymer has preferably (6) a melt flow rate $MFR_5$ of 0.05 to 2.00g/10 minute.

The respective items shall be explained below. However, explanations on the same items as described above shall be omitted.

(3) Long chain branch index LCBI

The ethylene base copolymer (III) according to the present invention has a long chain branch index LCBI falling in a range of 0.6 to 2.0, preferably 0.6 to 1.7.

LCBI is an index showing the presence of a long chain branch, and if the LCBI is less than 0.6, a decrease in a long chain branch results in a decrease in entanglement of molecular chains themselves, so that cutting caused by drawing in high-speed molding is liable to be caused. On the other hand, if the LCBI exceeds 2.0, an increase in the long chain branch results in a marked increase in entanglement of the molecular chains themselves, and as a result thereof, fish eyes (FE) are locally produced on the film in many cases.

In this case, LCBI is calculated from a zero shear viscosity $\eta_0$ and a limiting viscosity $[\eta]$ according to the following equation with reference to Macromolecules, 32, p. 8454 to 8464 (1999):

$$LCBI = [\eta_0^{\,a}/(b[\eta])] - 1 \qquad\qquad (1)$$

The limiting viscosity $[\eta]$ is measured in decalin at 135°C. In the literature described above, $[\eta]$ is measured in trichlorobenzene, and therefore the coefficients (a = 0.2093 and b = 3.408) used in the present invention are different from the literature values.

The zero shear viscosity $\eta_0$ is determined in the following manner. A sample is molten at 190°C in 3 minutes and degassed for 30 seconds, and then a sample piece having a thickness of about 1 mm is prepared by compression molding. After cooling, this sample piece is interposed between two flat plates installed in ARES manufactured by Rheometrics Co., Ltd. and provided with dynamic distortion on the conditions of a temperature of 190°C, a distortion $\gamma$ of 15 % and a gap of 1.15 mm between the flat plates to determine a dependency of a complex viscosity $\eta^*$ on a frequency $\omega$.

Then, the values of the complex viscosity $\eta^*$ and the frequency $\omega$ which are obtained by the measurement described above are used to calculate unknown parameters $\omega_0$, m and $\eta_0$ by calculation according to a least square method based on the following equation. A program used for the calculation is Sigma Plot ver. 2.01 (manufactured by Jandel Corporation). The $\eta_0$ thus obtained is the zero shear viscosity.

$$\eta^*/\eta_0 = [1 + (\omega/\omega_0)^m]^{-0.72/m} \tag{2}$$

(4) Boiling hexane-soluble component amount

As described above, the ethylene base copolymer (III) of the present invention has preferably (1) a density d falling in a range of 940 to 970 kg/m$^3$, (2) a polydispersion index PDI falling in a range of 25 to 50 and (3) a long chain branch index LCBI falling in a range of 0.6 to 2.0, and it has further preferably a boiling hexane-soluble component amount of 1.0 % by weight or less, more preferably 0.9 % by weight or less and particularly preferably 0.8 % by weight or less. If it exceeds 1.0 % by weight or less, the impact resistance is reduced in a certain case. This soluble amount is a value determined by the method described above.

The more preferred ethylene base copolymer of the present invention is an ethylene base copolymer which has a density d falling in a range of 940 to 970 kg/m$^3$, a polydispersion index PDI falling in a range of 25 to 50, a creep distortion $\gamma_0$ of 100 % or less, a critical shear stress $\sigma_c$ of 0.21 MPa or more and a long chain branch index LCBI falling in a range of 0.6 to 2.0.

The most preferred ethylene base copolymer of the present invention is an ethylene base copolymer which has a density d falling in a range of 940 to 970 kg/m$^3$, a polydispersion index PDI falling in a range of 25 to 50, a creep distortion $\gamma_0$ of 100 % or less, a critical shear stress $\sigma_c$ falling in a range of 0.21 to 0.50 MPa and a long chain branch index LCBI falls in a range of 0.6 to 2.0.

Such ethylene base copolymer can be polyethylene for a film which has a high impact strength and few fish eyes and which is excellent in a high extruding characteristic, a high-speed moldability, a bubble stability and a tear strength in molding and is valuable in terms of practical use. Production process for ethylene base copolymer:

The ethylene base copolymer according to the present invention has the properties described above, and a polyethylene resin which is a raw material for the above copolymer can be produced by a slurry polymerization method, a bulk polymerization method and a gas phase polymerization method. It is produced preferably via reactions of at least two steps by the slurry polymerization method using a Ziegler catalyst.

The ethylene base copolymer according to the present invention can be produced using a catalyst system comprising a solid catalyst component and an organic aluminum compound as this Ziegler catalyst.

In this case, the solid catalyst component is obtained by bringing a solid substance into contact with (1) a titanium compound or (2) a halogen-containing silicon compound, alcohol and a titanium compound.

The solid substance containing a magnesium compound has suitably an average particle diameter of 10 $\mu$m or less and a maximum particle diameter of 15 $\mu$m or less. In the preferred embodiment, the solid substance is obtained by reacting metal magnesium with alcohol or reacting metal magnesium with alcohol and a halogen-containing compound which contains halogen of an amount of 0.0001 gram atom or more per mole of metal magnesium.

Capable of being given as the solid substance containing a magnesium compound are substantially anhydrous magnesium chloride, magnesium fluoride, magnesium bromide, magnesium iodide and magnesium dialkoxide. Those which have an alkyl group having 1 to 6 carbon atoms are preferred as magnesium dialkoxide. In particular, magnesium dialkoxide obtained from metal magnesium and alcohol is preferably used.

This metal magnesium shall not specifically be restricted by a shape, and capable of being used is metal magnesium having an optional particle diameter, for example, granular, ribbon-shaped or powdery magnesium. Further, it shall not specifically be restricted as well by a surface condition of metal magnesium, but magnesium having no coating formed on a surface is preferred.

Optional alcohols can be used as the alcohol, and lower alcohols having 1 to 6 carbon atoms are preferably used. In particular, ethanol is preferably used since obtained is the solid substance described above which notably elevates the catalyst performance. A purity and a moisture content of alcohol shall not specifically be restricted, but if alcohol having a large moisture content is used, magnesium hydroxide is formed on the surface of metal magnesium, and therefore alcohol having a moisture content of 1 % or less, particularly 2000 ppm or less is preferably used.

An amount of alcohol shall not be cared and is preferably 2 to 100 mole, particularly preferably 5 to 50 mole per mole of metal magnesium. If alcohol is too much, a yield of the solid substance having a good morphology is likely to be reduced. If it is too small, no smooth stirring in a reaction bath is likely to be carried out. However, it shall not be restricted to the above mole ratio.

The reaction itself of metal magnesium with alcohol can be carried out in the same manner as those of publicly known methods. For example, it is a method in which metal magnesium is reacted with alcohol under refluxing until hydrogen gas is not observed to be generated to obtain a solid substance. It is preferably carried out using, if necessary, an inactive organic solvent (for example, saturated hydrocarbons such as n-hexane and the like) under inert gas (for example, nitrogen gas and argon gas) atmosphere. It is not necessary to add the whole amounts of metal magnesium and alcohol to a reaction bath from the beginning, and they may be divided and added. The particularly preferred embodiment is a method in which the whole amount of alcohol is added from the beginning and metal magnesium is added dividing into several times.

A solid substance obtained from metal magnesium, alcohol, halogen and/or a halogen-containing compound can preferably be used as well. Optional metal magnesium can be used as is the case with those described above. Optional alcohol can be used as is the case with those described above. The kind of halogen shall not specifically be restricted, and chlorine, bromine or iodine is preferred. In particular, iodine can suitably be used. The halogen-containing compound shall not specifically be restricted, and inorganic or organic compounds can be used as long as they are compounds containing halogen atoms. To be specific, capable of being suitably used are halogen-containing inorganic compounds such as $MgCl_2$, $MgI_2$, $Mg(OEt)I$, $Mg(OEt)Cl$, $MgBr_2$, $CaCl_2$, NaCl and KBr and halogen-containing organic compounds such as $CH_3I$, $CH_2I_2$, $CHI_3$, $CH_3Cl$, $CH_2Cl_2$, $CHCl_3$, $CH_3Br$ and $C_2H_5I$. Among them, $MgCl_2$ and $MgI_2$ are particularly preferred. A situation, a form and a particle size of these compounds shall not specifically be restricted and may be optional. They can be used in the form of, for example, a solution prepared using an alcohol base solvent such as ethanol.

An amount of alcohol shall not be cared and is preferably 2 to 100 mole, particularly preferably 5 to 50 mole per mole of metal magnesium. If alcohol is too much, a yield of the solid substance having a good morphology is likely to be reduced. If it is too small, no smooth stirring in a reaction bath is likely to be carried out. However, it shall not be restricted to the above mole ratio.

A use amount of the halogen is 0.0001 gram atom or more, preferably 0.0005 gram atom or more and more preferably 0.001 gram atom or more per gram atom of metal magnesium. Further, a use amount of the halogen-containing compound is 0.0001 gram atom or more, preferably 0.0005 gram atom or more and more preferably 0.001 gram atom or more per gram atom of metal magnesium in terms of a halogen atom contained in the halogen-containing compound.

The halogens and the halogen-containing compounds may be used alone or in combination of two or more kinds thereof respectively. Further, the halogens may be used in combination with the halogen-containing compounds. In this case, an amount of the whole halogen atoms is 0.0001 gram atom or more, preferably 0.0005 gram atom or more and more preferably 0.001 gram atom or more per gram atom of metal magnesium. An upper limit of a use amount of the halogen and/or halogen-containing compound may be, and in general, an amount of the whole halogen atoms is preferably less than 0.06 gram atom per gram atom of metal magnesium.

The reaction itself of metal magnesium and alcohol with halogen and/or the halogen-containing compound can be carried out in the same manner as those of publicly known methods. For example, it is a method in which metal magnesium and alcohol are reacted with halogen and/or the halogen-containing compound under refluxing until hydrogen gas is not observed (usually 20 to 30 hours) to be generated to obtain a solid substance. To be specific, it includes a method in which when, for example, iodine is used as halogen, solid iodine is added to alcohol containing metal magnesium and then the solution is refluxed by heating, a method in which an alcohol solution of iodine is dropwise added to alcohol containing metal magnesium and then the solution is refluxed by heating and a method in which an alcohol solution of iodine is dropwise added to alcohol containing metal magnesium while heating. Any methods are preferably carried out using, if necessary, an inactive organic solvent (for example, saturated hydrocarbons such as n-hexane and the like) under inert gas (for example, nitrogen gas and argon gas) atmosphere.

It is not necessary to add the whole amounts of metal magnesium, alcohol and halogen and/or the halogen-containing compound to a reaction bath from the beginning, and they may be divided and added. The particularly preferred embodiment is a method in which the whole amount of alcohol is added from the beginning and metal magnesium is added dividing into several times. In such manner, hydrogen gas is prevented from being generated temporarily in a large quantity, and it is very desirable from a viewpoint of safety. Also, a reaction bath can be small-sized. Further, entrainment of alcohol and halogen and/or the halogen-containing compound which is induced by hydrogen gas generated temporarily in a large quantity. A dividing frequency may be determined taking a scale of the reacting bath into consideration, and it is suitably 5 to 10 times, though not specifically cared, considering complexity of operation. The reaction itself may be either a batch system or a continuous system. Further, it is possible as a modified method to repeat an operation in which a small amount of metal magnesium is first added to alcohol added in the whole amount from the beginning and in which a product formed by the reaction is separated and removed into another bath and a small amount of metal magnesium is then added again.

A particle size of the solid substance described above is controlled by a crushing method shown below. Also, the particle size is controlled, if necessary, by a classifying method shown below. In the present invention, an average particle diameter of the solid substance has to be 10 μm or less, preferably 6 μm or less, and a maximum particle diameter thereof has to be 15 μm or less. If the average particle diameter exceeds 10 μm, an activity of the resulting catalyst is not satisfactory, and if the maximum particle diameter exceeds 15 μm, a film and a sheet comprising the ethylene base polymer which is produced using this solid substance as a solid catalyst component are deteriorated (fish eyes are generated in many cases) in appearance in a certain case. This particle diameter is measured by means of a particle size distribution analyzer CIS-1 manufactured by GALAI Co., Ltd. using a laser scanning analytical method.

The crushing method shall not specifically be restricted, and capable of being employed are a dry method in which crushing is carried out under inert gas environment of nitrogen and argon by means of a conventional ball mill, pearl mill and disper mill and a wet method in which crushing is carried out in an inactive organic solvent such as saturated hydrocarbons (for example, n-hexane and the like). An apparatus for carrying out this crushing shall not be restricted, and either of a batch system or a continuous system may be used. In respect to the crushing conditions, the conditions such as crushing time and the like may suitably be selected according to the respective crushing methods so that the diameter described above is obtained.

The classifying method shall not specifically be restricted, and capable of being employed are a dry method in which classification is carried out under inert gas environment of nitrogen and argon by means of a conventional sieve and cyclone and a wet method in which classification is carried out in an inactive organic solvent such as saturated hydrocarbons (for example, n-hexane and the like). An apparatus for carrying out this classification shall not be restricted, and either of a batch system or a continuous system may be used. Among the solid substances described above, (1) a reaction product of metal magnesium and alcohol or (2) a reaction product of metal magnesium and alcohol and halogen and/or a halogen-containing compound is suited from the viewpoints of a catalyst activity in using them as the solid catalyst components and an appearance of a film and a sheet comprising the resulting ethylene base polymer, and (2) is more preferred. The solid substance obtained above is washed and dried, if necessary, whereby a product can be obtained.

A solid catalyst component is obtained by bringing the solid substance described above into contact with at least a titanium compound. A titanium compound represented by Formula (I) can be as the titanium compound for the solid catalyst component:

$$\mathrm{TiX^1_4} \tag{I}$$

wherein $X^1$ represents a halogen atom, and a chlorine atom is particularly preferred.

The solid catalyst component may be a compound obtained by bringing the solid substance described above into contact with a halogen-containing silicon compound, alcohol and a titanium compound. The titanium compound for the solid catalyst component is the same compound as that represented by Formula (I) described above. A silicon compound represented by Formula (II) can be as the halogen-containing silicon compound for the solid catalyst component:

$$\mathrm{X^2_n Si(OR)_{4-n}} \tag{II}$$

wherein $X^2$ represents a halogen atom, and a chlorine atom and a bromine atom are particularly preferred; R represents an alkyl group having 1 to 8 carbon atoms, and methyl, ethyl and propyl are preferred; and n represents an integer of 1 to 4. To be specific, $SiCl_4$, $SiBr_4$, $SiCl_3(OCH_3)$ and $SiCl_2(OC_2H_5)_2$ can be given. They can be used alone or in a mixture of two or more kinds thereof.

Linear or branched, aliphatic or alicyclic alcohols can be used as the alcohol for the solid catalyst component. It is preferably primary or secondary alcohol having 1 to 8 carbon atoms. To be specific, it includes methanol, ethanol, propanol, isopropanol, butanol, isobutanol, amyl alcohol, octanol and cyclopentanol.

These solid catalyst components are prepared in the following manner. In the case of the solid catalyst component obtained by using the solid substance and the titanium compound each described above, the solid substance described above is dispersed in an inactive solvent. This inactive solvent shall not specifically be restricted as long as it is inactive to the solid substance and the solid catalyst component described above, and various solvents such as aliphatic hydrocarbons and alicyclic hydrocarbons can be used. To be specific, suited are butane, pentane, hexane, heptane and cyclohexane. An addition amount of the solid substance shall not specifically be restricted, and it is preferably 50 to 500 g per liter of the solvent from a viewpoint of convenience of the operation.

Then, the titanium compound as the solid catalyst component described above is added to this dispersion system and reacted on a temperature condition of 0 to 200°, preferably 50 to 150°C at atmospheric pressure or under applying pressure while stirring. An addition amount of the titanium compound is equimole or more, preferably an excess amount based on the solid substance (mole number of magnesium). To be specific, it is 1 to 20 times mole amount, preferably 1.5 to 10 times mole amount. The reaction time is, though depending on the reaction temperature, usually 5 minutes to 10 hours, preferably 30 minutes to 8 hours. In the case of non-solvent reaction, mechanical mixing may be carried out at the temperature and time described above by means of a ball mill or the like.

Further, in the case of the solid catalyst component obtained by bringing the solid substance described above into contact with the halogen-containing silicon compound, alcohol and the titanium compound each described above, the solid substance described above is dispersed in an inactive solvent. This inactive solvent is the same as described above. Then, the halogen-containing silicon compound as the solid catalyst component described above and alcohol are added to this dispersion system and reacted at a prescribed temperature and time while stirring to modify the solid substance. An addition amount of the halogen-containing silicon compound is an amount in which halogen/magnesium (atomic ratio) is 1.5 or less based on the solid substance. This ratio falls preferably in a range of 0.2 to 1.5, more preferably 0.5 to 1.4. If this ratio exceeds 1.5, an amount of fine particles (100 µm or less) of the resulting polyethylene is increased, and it is not preferred. An addition amount of alcohol is a mole number of 0.1 time or more based on the solid substance (mole number of magnesium). An upper limit of this addition amount shall not specifically be restricted, but use of the large amount results in waste of the titanium compound, and therefore the same mole as that of halogen contained in the halogen-containing silicon compound is usually a standard. If a use amount of alcohol is less than this lower limit, a rise in the polymerization activity or a rise in a bulk density of the polymer can not sufficiently be expected.

The reaction temperature is usually 0 to 150°C, preferably 20 to 100°C. The reaction time is, though depending on the reaction temperature, usually 5 minutes to 5 hours, preferably 30 minutes to 3 hours. The contact order of three kinds of the solid catalyst components in the reaction described above shall not specifically be restricted by it, and the reaction may be carried out dividing into two steps in which the solid substance is first reacted with the halogen-containing silicon compound and in which alcohol is then added to the above reaction system. As described above, reaction in which a solvent is used is the preferred embodiment of the present invention, but it can be carried out in the absence of a solvent. In this case, the solid substance, the halogen-containing silicon compound and alcohol may be directly mechanically blended in a prescribed proportion by means of a ball mill or the like.

After modifying the solid substance, the titanium compound is further added and reacted on a temperature condition of 0 to 200°C, preferably 50 to 150°C at atmospheric pressure or under applying pressure. An addition amount of the titanium compound is equimole or more, preferably an excess amount based on the solid substance (mole number of magnesium). To be specific, it is 1 to 20 times mole, preferably 1.5 to 10 times mole. The reaction time is, though depending on the reaction temperature, usually 5 minutes to 10 hours, preferably 30 minutes to 5 hours. In the case of non-solvent reaction, mechanical mixing may be carried out at the temperature and time described above by means of a ball mill or the like.

After carrying out the reaction described above, the solid catalyst component is separated from the reaction product and washed. In this case, washing is carried out using an inactive hydrocarbon solvent having 5 to 10 carbon atoms, for example, pentane, hexane, cyclohexane and heptane. The washed solid catalyst component may be used as it is or in the form of a catalyst component dispersed in an inactive hydrocarbon solvent in an inert gas in a suitable concentration.

In the case of the solid catalyst component obtained by reacting alcohol with metal magnesium which is suited as the solid substance or the solid catalyst component obtained by reacting alcohol and metal magnesium with the halogen-containing compound containing halogen of an amount of 0.0001 gram atom or more per mole of metal magnesium, suited is a combination in which they are brought into contact with the halogen-containing silicon compound, the alcohol and the titanium compound. A catalyst system comprising the solid catalyst component described above and an organic aluminum compound can suitably be used for producing the ethylene base polymer of the present invention.

A compound represented by Formula (III) is widely used as this organic aluminum compound:

$$AlR^3_nX^3_{3-n} \qquad\qquad (III)$$

wherein $R^3$ represents an alkyl group having 1 to 10 carbon atoms, a cycloalkyl group or an aryl group; $X^3$ represents a halogen atom, and a chlorine atom or a bromine atom is particularly preferred; and n represents an integer of 1 to 3. To be specific, capable of being given are trialkylaluminum compounds, for example, trimethylaluminum, triethylaluminum, triisobutylaluminum, diethylaluminum monochloride, diisobutylaluminum monochloride, diethylaluminum monoethoxide and ethylaluminum sesquichloride. They may be used alone or in combination of two or more kinds thereof.

In producing the ethylene base copolymer of the present invention, a dispersion of the solid catalyst component described above and the organic aluminum compound are added as a catalyst to the reaction system of polymerization, and then ethylene or α-olefin is introduced thereinto. The α-olefin used for copolymerization with ethylene is selected from linear or branched α-olefins having 3 to 20 carbon atoms, preferably 3 to 12 carbon atoms. To be specific, they are propylene, butene-1, pentene-1, hexene-1, heptene-1, octene-1, nonene-1, decene-1, dodecene-1, 4-methylpentene-1 and mixtures thereof. An introducing amount of α-olefin falls usually in a range of 0.2 to 5 % by weight based on ethylene.

The ethylene base copolymer of the present invention is obtained preferably by copolymerizing ethylene with the α-olefin described above. Two or more kinds of ethylene copolymers (polyethylene) are preferably produced via at least two steps of reaction by continuous polymerization rather than homopolymerization of an ethylene base copolymer. For example, when produced by two step continuous polymerization comprising an ethylene homopolymer and an ethylene copolymer, a polymerization amount ratio of the ethylene copolymer to ethylene in the ethylene homopolymer is preferably 1 : 0.7 to 1 : 1.0. If ethylene has a polymerization amount ratio of less than 1 : 0.7, the impact resistance is reduced, and therefore it is not preferred. If it exceeds 1 : 1.0, the fluidity is lowered in a certain case.

When the ethylene base copolymer of the present invention is produced via at least two continuous steps of reaction by a slurry polymerization method using a Ziegler catalyst, polyethylene (A) produced at the first step has preferably a melting enthalpy ΔH of 200 J/g or more, more preferably 220 J/g or more and particularly preferably 220 to 300 J/g. In order to elevate a rigidity of the ethylene base copolymer, a melting enthalpy of the polyethylene (A), that is, the crystallinity has to be raised, and if it is less than 200 J/g, a balance between a rigidity and an impact strength of the film is reduced in a certain case.

A melting enthalpy ΔH of the polyethylene (A) is measured by means of a differential scanning type calorimeter (DSC). That is, the polyethylene (A) is pressed at 190°C to prepare a sample (thickness: about 1 mm) of about 10 mg. The sample is measured for a melting enthalpy by means of a differential scanning type calorimeter (DSC manufactured by Perkin Elmer Co., Ltd.). In respect to the measuring conditions, the sample is maintained at 190°C for 3 minutes under nitrogen atmosphere, and then it is cooled down to 25°C at a cooling speed of 10°C/minute; it is maintained at 25°C for 3 minutes, and then the temperature is elevated up to 160°C at a heating speed of 10°C/minute. A melting enthalpy ΔH in the melting curve thus obtained is calculated. Base points in the calculation are set to 35°C and 140°C.

The polyethylene (A) produced at the first step has preferably a molecular weight distribution (weight average molecular weight Mw/number average molecular weight Mn) of 5 to 30, more preferably 5 to 20, further preferably 6 to 15 and particularly preferably 7 to 13.

If the polyethylene (A) has a molecular weight distribution of less than 5, the extruding characteristic is reduced to a large extent, and it is not preferred. If it exceeds 30, the impact resistance is reduced in a certain case.

A molecular weight distribution (Mw/Mn) of the polyethylene (A) is measured by gel permeation chromatography (GPC) on the following conditions:

High temperature GPC: Waters 1500CV+, GPC column: Shodex UT-806M (2 columns)

Solvent: 1,2,4-trichlorobenzene, temperature: 145°C, flow velocity: 1.0 ml/minute

Calibration curve: universal calibration, detector: RI (Waters 150C)

Sample concentration: 0.2 % (W/V)

Data analysis: GPC-PRO software (Ver. 3.12),

VISCOTEK Co., Ltd.

An extruding machine used for the ethylene base copolymer according to the present invention may be a single shaft extruding machine, but it is preferably a double shaft screw extruding machine. This makes it possible to reduce fish eyes (FE) generated on the film. Preferred as the extruding machine are machines having double shafts such as an equi-direction rotary double shaft extruding machine and an aniso-direction rotary double shaft extruding machine. Examples of the equi-direction rotary double shaft extruding machine are TEX, CMP-X and CMP-XII manufactured by Nippon Seikosho Co., Ltd., TEM manufactured by Toshiba Machinery Co., Ltd., KTX manufactured by Kobe Seikosho Co., Ltd. and ZSK manufactured by KRUPP WERNER & PFLEIDERER Co., Ltd. Examples of the aniso-direction rotary double shaft extruding machine are CIM, CIMrP and CIM-PII manufactured by Nippon Seikosho Co., Ltd. and FCM, LCM-G and LCM-H manufactured by Kobe Seikosho Co., Ltd. Included therein is a tandem extruding machine which is a combination (including a single shaft extruding machine at the second step) of these plural extruding machines.

In the present invention, the ethylene base copolymer described above which is produced using the Ziegler catalyst is subjected to drying treatment in the system, and then it is preferably introduced into an extruding machine without being substantially exposed to the air. It is because the ethylene base copolymer (polyethylene resin) produced by a slurry polymerization method or a gas phase polymerization method using the Ziegler catalyst is powdery and therefore has a large surface area, so that it is liable to degenerate by exposure to the air. To be specific, the oxygen concentration is 5 volume % or less, preferably 1 volume % or less, more preferably 0.5 volume % or less, further preferably 0.1 volume % or less, particularly preferably 0.05 volume % or less and most preferably 0 volume % or less. If the oxygen concentration exceeds 5 volume %, the ethylene base copolymer is yellowed in a certain case.

This oxygen concentration is controlled while measuring by means of an apparatus making use of an electric conductivity or a measuring equipment using a gas phase chromatograph. For example, when a polyethylene resin is brought into contact with a mixed gas containing oxygen at a hopper, a sensor of the measuring equipment is disposed preferably in the inside of the hopper or in a lower part in the vicinity of an inlet in a solid matter-transporting part of an extrusion molding machine.

An amount of an antioxidant added to the power polyethylene resin produced using the Ziegler catalyst is preferably 4,000 ppm or less, more preferably 3,000 ppm or less. This antioxidant can suitably be added before the polyethylene resin is molten. Capable of being used as the antioxidant are, for example, phenol base stabilizers, organic phosphite base stabilizers, thioether base stabilizers and hindered amine base stabilizers.

The phenol base stabilizers include, for example, 2,6-di-t-butyl-4-methylphenol, 2,6-di-t-butyl-4-ethylphenol, 2,6-di-cyclohexyl-4-methylphenol, 2,6-diisopropyl-4-ethylphenol, 2,6-di-t-amyl-4-methylphenol, 2,6-di-t-octyl-4-n-propylphenol, 2,6-di-cyclohexyl-4-n-octylphenol, 2-isopropyl-4-methyl-6-t-butylphenol, 2-t-butyl-2-ethyl-6-t-octylphenol, 2-isobutyl-4-ethyl-5-t-hexylphenol, 2- cyclohexyl-4-n-butyl-6-isopropylphenol, styrene-reduced mixed cresol, dl-α-tocopherol, t-butylhydroquinone, 2,2'-methylenebis(4-methyl-6-t-butylphenol), 4,4'-butylidenebis(3-methyl-6-t-butylphenol), 4,4'-thiobis(3-methyl-6-t-butylphenol), 2,2'-thiobis(4-methyl-6-t-butylphenol), 4,4'-methylenebis(2,6-di-t-butylphenol), 2,2'-methylenebis[6-(1-methylcyclohexyl)-p-cresol], 2,2'-ethylidenebis(4,6-di-t-butylphenol), 2,2'-butylidenebis (2-t-butyl-4-methylphenol), 1,1,3-tris(2-methyl-4-hydroxy-5-t-butylphenyl)butane, triethylene glycol-bis[3-(3-t-butyl-5-methyl-4-hydroxyphenyl)propionate], 1,6-hexanediol-bis[3-(3,5-di-t-butyl-4-hydroxyphenyl)propionate], 2,2'-thiodiethylenebis[3-(3,5-di-t-butyl-4-hydroxyphenyl)propionate], N,N'-hexamethylenebis(3,5-di-t-butyl-4-hydroxy-hydrocinnamide), 3,5-di-t-butyl-4-hydroxybenzylphosphonate diethyl ester, 1,3,5-tris(2,6-dimethyl-3-hydroxy-4-t-butylbenzyl) isocyanurate, 1,3,5-tris[(3,5-di-t-butyl-4-hydroxyphenyl)propionyloxyethyl] isocyanurate, tris(4-t-butyl-2,6-dimethyl-3-hydroxybenzyl) isocyanurate, 2,4-bis(n-octylthio)-6-(4-hydroxy-3,5-di-t-butylanilino)-1,3,5-triazine, tetrakis[methylene-3-(3,5-di-t-butyl-4-hydroxyphenyl)propionate]methane, calcium bis(ethyl 3,5-di-t-butyl-4-hydroxybenzylphosphonate), nickel bis(ethyl 3,5-di-t-butyl-4-hydroxybenzylphosphonate), bis[3,3-bis(3-t-butyl-4-hydroxyphenyl)butyric acid] glycol ester, N,N'-bis[3-(3,5-di-t-butyl-4-hydroxyphenyl)propionyl]hydrazine, 2,2'-oxamidebis[ethyl-3-(3,5-di-t-butyl-4-hydroxyphenyl)propionate], bis[2-t-butyl-4-methyl-6-(3-t-butyl-5-methyl-2-hydroxybenzyl)phenyl] terephthalate, 1,3,5-trimethyl-2,4,6-tris(3,5-di-t-butyl-4-hydroxybenzyl)benzene, 3,9-bis[1,1-dimethyl-2-[β-(3-t-butyl-4-hydroxy-5-methylphenyl)propionyloxy]ethyl]-2,4,8,10-tetraoxaspiro[5,5]-undecane, 2,2-bis[4-[2-(3,5-di-t-butyl-4-hydroxyhydrocinnamoyloxy)]ethyoxyphenyl]propane and β-(3,5-di-t-butyl-4-hydroxyphenyl)propionic acid alkyl esters such as stearyl-β-(4-hydroxy-3,5-di-t-butylphenol)propionate. Among them, suited are 2,6-di-t-butyl-4-methylphenol, stearyl-β-(4-hydroxy-3,5-di-t-butylphenol)propionate, 2,2'-ethylidenebis(4,6-di-t-butylphenol) and tetrakis[methylene-3-(3,5-di-t-butyl-4-hydroxyphenyl)propionate]methane.

The organic phosphite base stabilizers include, for example, trioctyl phosphite, trilauryl phosphite, tristridecyl phosphite, trisisodecyl phosphite, phenyldiisooctyl phosphite, phenyldiisodecyl phosphite, phenyldi(tridecyl) phosphite, diphenylisooctyl phosphite, diphenylisodecyl phosphite, diphenyltridecyl phosphite, triphenyl phosphite, tris(nonylphenyl) phosphite, tris(2,4-di-t-butylphenyl) phosphite, tris(butoxyethyl) phosphite, tetratridecyl-4,4'-butylidenebis(3-methyl-6-t-butylphenol)-diphosphite, 4,4'-isopropylidene-diphenolalkyl phosphite (provided that alkyl has 12 to 15 carbon atoms), 4,4'-isopropylidenebis(2-t-butylphenol)·di(nonylphenyl) phosphite, tris(biphenyl) phosphite, tetra(tridecyl)-1,1,3-tris(2-methyl-5-t-butyl-4-hydroxyphenyl)butane diphosphite, tris(3,5-di-t-butyl-4-hydroxyphenyl) phosphite, hydrogenated 4,4'-isopropylidenediphenol polyphosphite, bis(octylphenyl)·bis[4,4'-butylidenebis(3-methyl-6-t-butylphenol)]-1,6-hexanediol diphosphite, hexatridecyl-1,1,3-tris(2-methyl-4-hydroxy-5-t-butylphenyl) diphosphite, tris[4,4'-isopropylidenebis(2-t-butylphenol)] phosphite, tris(1,3-distearoyloxyisopropyl) phosphite, 9,10-dihydro-9-phosphaphenanthrene-10-oxide, tetrakis(2,4-di-t-butylphenyl)-4,4'-biphenylene diphosphonite, distearylpentaerythritol diphosphite, di(nonylphenyl)pentaerythritol diphosphite, phenyl·4,4'-isopropylidenediphenol·pentaerythritol diphosphite, bis(2,4-di-t-butylphenyl)pentaerythritol diphosphite, bis(2,6-di-t-4-methylphenyl)-pentaerythritol diphosphite and phenyl bisphenol-A-pentaerythritol diphosphite.

Among them, preferred are tris(2,4-di-t-butylphenyl) phosphite, tris(nonylphenyl) phosphite and tetrakis (2,4-di-t-butylphenyl)-4,4'-biphenylene diphosphonite. In particular, tris(2,4-di-t-butylphenyl) phosphite is suited.

Dialkyl thiodipropionates and polyhydric alcohol esters of alkylthiopropionic acid are preferably used as the organic thioether base stabilizers.

Dialkyl thiodipropionates which have an alkyl group having 6 to 20 carbon atoms are preferred as the dialkyl thiodipropionates used in this case, and polyhydric alcohol esters of alkylthiopropionic acid which has an alkyl group having 4 to 20 carbon atoms are preferred as the polyhydric alcohol esters of alkylthiopropionic acid.

In this case, examples capable of being given as polyhydric alcohols constituting the polyhydric alcohol esters include glycerin, trimethylolethane, trimethylolpropane, pentaerythritol and trishydroxyethyl isocyanurate. Capable of being given as such dialkyl thiodipropionates are, for example, dilauryl thiodipropionate, dimyristyl thiodipropionate and distearyl thiodipropionate.

On the other hand, capable of being given as the polyhydric alcohol esters of alkylthiopropionic acid are, for example, glycerin tributylthiopropionate, glycerin trioctylthiopropionate, glycerin trilaurylthiopropionate, glycerin tristearylthiopropionate, trimethylolethane tributylthiopropionate, trimethylolethane trioctylthiopropionate, trimethylolethane trilaurylthiopropionate, trimethylolethane tristearylthiopropionate, pentaerythritol tetrabutylthiopropionate, pentaerythritol tetraoctylthiopropionate, pentaerythritol tetralaurylthiopropionate and pentaerythritol tetrastearylthiopropionate.

Among them, suited are dilauryl thiodipropionate, distearyl thiodipropionate and pentaerythritol tetralaurylthiopropionate.

Capable of being given as the hindered amine base stabilizers are, for example, bis(2,2,6,6-tetramethyl-4-piperidyl) sebacate, succinic acid dimethy-1-(2-hydroxyethyl)-4-hydroxy-2,2,6,6-tetramethylpiperidine polycondensation product, poly[6-(1,1,3,3-tetramethylbutyl)imino-1,3,5-triazine-2,4-diyl] [(2,2,6,6-tetramethyl-4-piperidyl)imino]hexamethylene[2,2,6,6-tetramethyl-4-piperidyl]imino], tetrakis(2,2,6,6-tetramethyl-4-piperidyl)-1,2,3,4-butanetetracarboxylate, 2,2,6,6-tetramethyl-4-piperidylbenzoate, bis(1,2,2,6,6-pentamethyl-4-piperidyl)-2-(3,5-di-t-butyl-4-hydroxybenzyl)-2-n-butylmalonate, bis(N-methyl-2,2,6,6-tetramethyl-4-piperidyl) sebacate, 1,1'-(1,2-ethanediyl)bis(3,3,5,5-tetramethylpiperadinone), (mixed 2,2,6,6-tetramethyl-4-piperidyl/tridecyl)-1,2,3,4-butanetetracarboxylate, (mixed 1,2,2,6,6-pentamethyl-4-piperidyl/tridecyl)-1,2,3,4-butanetetracarboxylate, mixed [2,2,6,6-tetramethyl-4-piperidyl/β, β, β', β'-tetramethyl-3,9-[2,4,8,10-tetraoxaspiro(5,5)undecane]diethyl]-1,2,3,4-butanetetracarboxylate, mixed [1,2,2,6,6-pentamethyl-4-piperidyl/β, β, β', β'-tetramethyl-3,9-[2,4,8,10-tetraoxaspiro(5,5)undecane]diethyl]-1,2,3,4-butanetetracarboxylate,N,N'-bis(3-aminopropyl)ethylenediamine-2,4-bis[N-butyl-N-(1,2,2,6,6-pentamethyl-4-piperidyl)amino]-6-chloro-1,3,5-triazine condensation product, poly[6-N-morpholyl-1,3,5-triazine-2,4-diyl][(2,2,6,6-tetramethyl-4-piperidyl)imino]hexamethylene[(2,2,6,6-tetramethyl-4-piperidyl)imido], a condensation product of N,N'-bis(2,2,6,6-tetramethyl-4-piperidyl)hexamethylenediamine and 1,2-dibromoethane and [N-(2,2,6,6-tetramethyl-4-piperidyl)-2-methyl-2-(2,2,6,6-tetramethyl-4-piperidyl)imino]propionamide.

Among these hindered amine base stabilizers, particularly suited are succinic acid dimethy-1-(2-hydroxyethyl)-4-hydroxy-2,2,6,6-tetramethylpiperidine polycondensation product, poly[6-(1,1,3,3-tetramethylbutyl)imino-1,3,5-triazine-2,4-diyl][(2,2,6,6-tetramethyl-4-piperidyl)imino]hexamethylene[(2,2,6,6-tetramethyl-4-piperidyl)imino], tetrakis(2,2,6,6-tetramethyl-4-piperidyl)-1,2,3,4-butanetetracarboxylate, bis(1,2,2,6,6-pentamethyl-4-piperidyl)-2-(3,5-di-t-butyl-4-hydroxybenzyl)-2-n-butylmalonate, 1,1'-(1,2-ethanediyl)bis(3,3,5,5-tetramethylpiperadinone), (mixed 2,2,6,6-tetramethyl-4-piperidyl/tridecyl)-1,2,3,4-butanetetracarboxylate, (mixed 1,2,2,6,6-pentamethyl-4-piperidyl/tridecyl)-1,2,3,4-butanetetracarboxylate, mixed [2,2,6,6-tetramethyl-4-piperidyl/β, β, β', β'-tetramethyl-3, 9- [2,4,8,10-tetraoxaspiro(5,5)undecane]diethyl]-1,2,3,4-butanetetracarboxylate, mixed [1,2,2,6,6-pentamethyl-4-piperidyl/β, β, β', β'-tetramethyl-3,9-[2,4,8,10-tetraoxaspiro(5,5)undecane]diethyl]-1,2,3,4-butanetetracarboxylate, N,N'-bis(3-aminopropyl)ethylenediamine-2,4-bis[N-butyl-N-(1,2,2,6,6-pentamethyl-4-piperidyl)amino]-6-chloro-1,3,5-triazine condensation product, poly[6-N-morpholyl-1,3,5-triazine-2,4-diyl][(2,2,6,6-tetramethyl-4-piperidyl)imino]hexamethylene[(2,2,6,6-tetramethyl-4-piperidyl)imido], a condensation product of N,N'-bis(2,2,6,6-tetramethyl-4-piperidyl)hexamethylenediamine and 1,2-dibromoethane and [N-(2,2,6,6-tetramethyl-4-piperidyl)-2-methyl-2-(2,2,6,6-tetramethyl-4-piperidyl)imino]propionamide.

Allowed to be blended, if necessary, with the ethylene base copolymer of the present invention as long as the object of the present invention is not damaged are additives such as neutralizing agents (metallic soap, hydrotalcite and the like), weatherability stabilizers, heat resistant stabilizers, antistatic agents, slip preventives, antiblocking agents, defogging agents, lubricants, pigments, dyes, nucleus-forming agents, plasticizers and anti-aging agents. A content of the neutralizing agent is preferably 500 to 5,000 ppm, more preferably 1,000 to 4,000 ppm.

The present invention provides an inflation film comprising the ethylene base copolymer thus obtained as a base material. An inflation molding method shall not specifically be restricted, and publicly known methods can be used. In respect to the molding conditions, the temperature falls preferably in a range of 160 to 340°C, and the blow-up ratio falls preferably in a range of 1.1 to 6.0. If this temperature is lower than 160°C, it is likely that the ethylene base copolymer is not sufficiently molten, and if it exceeds 340°C, the resin is deteriorate, so that the quality of the film is reduced in a certain case. On the other hand, if the blow-up ratio is less than 1.1 or exceeds 6.0, the high quality film which is well balanced in longitudinal and lateral directions is less likely to be obtained. The inflation film thus obtained has a thickness falling in a range of usually 5 to 100 μm, preferably 10 to 60 μm.

Next, the present invention shall more specifically be explained with reference to examples and comparative examples, but the present invention shall not be restricted to these examples.

Measurement of the physical property values, evaluation of the physical properties and moldability of the film other than those described in the above text were carried out in the following manners.

(1) Melt flow rate $MFR_2$ (g/10 minute):

A melt flow rate $MFR_2$ of the polyethylene (A) is a value converted to an extruded amount per 10 minutes, and the extruded amount was measured at a temperature of 190°C and a load of 2.16 kg (21.2N) according to JIS K7210.

An extruded amount of the ethylene base polymer was less than 0.1 g/10 minute with $MFR_2$ measured at 190°C and 2.16 kg, and therefore it was measured with $MFR_5$ (190°C and load: 5 kg (49N) ) .

(2) Tensile elastic modulus:

Measured according to JIS K7127. Measurement was carried out at a drawing speed of 200 mm/minute in an MD (machine direction) and a TD (transverse direction) to determine it by reading a 1 % elongation load.

(3) Tear strength:

Measured according to JIS P8116.

(4) Yellow index (YI):

Measured according to JIS K7103 using the pelletized ethylene base copolymer.

(5) Film impact strength:

Measured by means of a film impact tester (manufacture by Toyo Seiki Co., Ltd.). The hammer capacity was set to 294 N·cm.

(6) Fish eye (FE):

FE means spherical lumps and stripes produced on a film surface. The inflation film was observed through a fluorescent lump to visually count the number of FE per 1,000 $cm^2$.

(7) Evaluation method of extruding characteristic:

Inflation molding was carried out by the method described above and evaluated by a screw revolution (rpm) at a fixed discharge amount (60 kg/hour). The lower revolution shows the more excellent extruding characteristic.

(8) High-speed moldability:

Used as an evaluating method was Plako NLM 50 (dice type: Plako SG-11-100F6, lip part: (outer diameter: 100 mmφ, gap: 1.2 mm, land length:20 mm), spiral part outer diameter: 110 mmφ, number of thread: 6). The molding conditions were set to a discharge amount of 65 kg/hour, a receiving speed of 50 m/minute, a film folding diameter of 500 mm, a film thickness of 25 μm, a set temperature of 200°C and a blow ratio of 3.5. The high-speed moldability was marked by ○ if the film was not broken in inflation molding on the conditions described above, and it was marked by × if the film was broken.

(9) Bubble stability:

A variation of a film width was visually observed. The mark ○ was given if mechanical vibration was not observed, and the mark × was given if mechanical vibration was observed.

Example 1

(1) Production of catalyst

A reaction bath (content volume: 5 liter) equipped with a controlling stirrer for a solid substance was sufficiently substituted with nitrogen gas and then charged with 80 g of metal magnesium, 1210 g of ethanol and 4 g of iodine to react them under a refluxing condition while stirring until hydrogen gas was not observed to be generated from the system. This reaction solution was dried under reduced pressure to obtain a solid product. A stainless steel-made ball mill was charged with 250 g of this solid product and 2 liter of hexane, and it was crushed for 10 hours to obtain a solid substance.

A reaction bath (content volume: 5 liter) equipped with a stirrer which was sufficiently substituted with nitrogen gas was charged with 150 g of the solid substance obtained above and 2 liter of dehydrated hexane, and 49 ml of silicon tetrachloride and 49 ml of isopropanol were added thereto while stirring to react them at 70°C for 2 hours. Then, 360 ml of titanium tetrachloride was added thereto and reacted at 70°C for 6 hours, and a solid matter was filtered and washed with hexane to obtain a solid catalyst.

(2) Production of ethylene base copolymer

A polymerization apparatus having a content volume of 200 liter equipped with a stirrer was continuously fed with 6 kg/hour of ethylene, 17 liter/hour of hexane and 122 liter/hour of hydrogen, and the solid catalyst component described above and triethylaluminum were introduced thereinto at the speeds of 0.9 millimole/hour in terms of a titanium atom and 29.7 millimole/hour respectively to continuously react them on the conditions of a polymerizing temperature of 80°C, a polymerizing pressure (total pressure) of 4.7 kg/cm$^2$ G and a residence time of 3.5 hours.

A suspension of hexane containing polyethylene (A) thus obtained was introduced into a deaerating bath at the same temperature to separate unreacted gases, and then the whole amount was introduced as it was into a subsequent polymerization reactor of the second stage.

The polymerization reactor of the second stage was fed with 4.5 kg/hour of ethylene, 17 liter/hour of hexane, 148 g/hour of 1-butene and 0.3 liter/hour of hydrogen to react them at 80°C on the conditions of a total pressure of 1.9 kg/cm$^2$ G and a residence time of 2.2 hours.

A suspension of hexane containing polyethylene thus obtained was subjected to solid-liquid separation, and a solid matter obtained was dried to obtain an ethylene base copolymer (ethylene·1-butene copolymer).

The properties of the polyethylene obtained in (2) described above are shown in Table 1. In Table 1, polyethylene A is polyethylene obtained in the polymerization reactor of the first stage, and polyethylene B is polyethylene obtained in the polymerization reactor of the second stage.

The powdery ethylene base copolymer thus obtained was blended with 900 ppm of Irugafos 168, 500 ppm of Iruganox 1010 and 2,000 ppm of calcium stearate in the system so that the copolymer was not exposed even once to the air, and then it was put into a 200 liter SUS-made vessel substituted with nitrogen. The SUS-made vessel charged therein with the powder was connected to a feeder of an extruding machine, and the feeder was completely substituted in an inside thereof with nitrogen. Then, the gate was opened to feed the powder into the feeder while supplying pressurized nitrogen. A double shaft extruding machine used is an equi-direction rotary double shaft extruding machine RWX30HSS-32.5W-2V (manufactured by Nippon Seikosho Co., Ltd.). The oxygen concentration is 0.05 % or less.

The properties of this ethylene base copolymer are shown in Table 1. This ethylene base copolymer was used ad subjected to inflation molding on the following conditions. Used as a molding machine was LM-50 model EX-5028GL manufactured by Plako Co., Ltd. (dice type: spiral system (number of thread: 4), lip aperture: 60 mm$\phi$ (gap: 1.2 mm)) to set up an aluminum-made inner core subjected to surface knurling processing. The molding conditions were set to a discharge amount of 24.6 kg/hour, a receiving speed of 18.5 m/minute, a film folding diameter of 400 mm, a film thickness of 30 μm, a set temperature of 190°C, a blow-up ratio of 4.25 and a frost line of 50 mm.

Results obtained by evaluating the physical properties and moldability of the film are shown in Table 1. Before measuring the physical property values of the film, the film was left standing for 24 hours or longer for conditioning according to JIS standard temperature condition second grade ($23 \pm 2$°C) and JIS standard humidity condition second grade ($50 \pm 5$ % RH).

Example 2

The same procedure as in Example 1 (2) was carried out, except that in Example 1 (2), changed were a feeding amount of hydrogen to 101.4 liter/hour in the first polymerization step and a feeding amount of ethylene to 4.2 kg/hour, a feeding amount of hexane to 11.9 liter/hour, a feeding amount of 1-butene to 160 g/hour and a feeding amount of hydrogen to 0.1 liter/hour respectively in the second polymerization step. The results thereof are shown in Table 1.

Example 3

The same procedure as in Example 1 (2) was carried out, except that in Example 1 (2), changed were a feeding amount of hydrogen to 105.0 liter/hour in the first polymerization step and a feeding amount of ethylene to 4.8 kg/hour, a feeding amount of hexane to 13.6 liter/hour, a feeding amount of 1-butene to 140 g/hour and a feeding amount of hydrogen to 0.4 liter/hour respectively in the second polymerization step. The results thereof are shown in Table 1.

Comparative Example 1

The same procedure as in Example 1 (2) was carried out, except that in Example 1 (2), changed were the aluminum component to 29.7 millimole/hour of triisobutylaluminum and a feeding amount of hydrogen to 55 liter/hour respectively in the first polymerization step and a feeding amount of ethylene to 4.8 kg/hour, a feeding amount of hexane to 13.6 liter/hour, a feeding amount of 1-butene to 268 g/hour and a feeding amount of hydrogen to 0.5 liter/hour respectively in the second polymerization step. The results thereof are shown in Table 1.

Comparative Example 2

The same procedure as in Example 1 (2) was carried out, except that in Example 1 (2), changed were the aluminum component to 29.7 millimole/hour of triisobutylaluminum and a feeding amount of hydrogen to 71 liter/hour respectively in the first polymerization step and a feeding amount of ethylene to 6.6 kg/hour, a feeding amount of hexane to 18.7 liter/hour, a feeding amount of 1-butene to 100 g/hour and a feeding amount of hydrogen to 1.8 liter/hour respectively in the second polymerization step. The results thereof are shown in Table 1.

Table 1

| | | Example | | | Comparative Example | |
|---|---|---|---|---|---|---|
| | | 1 | 2 | 3 | 1 | 2 |
| (Polyethylene A) | MFR$_2$ (g/10 minute) 2.16 kg | 1000 | 393 | 375 | 50 | 323 |
| | Density (kg/m$^3$) | 980 | 978 | 978 | 977 | 978 |
| | Molecular weight distribution (Mw/Mn) | 9.8 | 9.9 | 10.4 | 9.0 | 9.5 |
| | Melting enthalpy $\triangle$H (J/g) | 249 | 247 | 248 | 234 | 242 |
| (Polyethylene B) | Density (kg/m$^3$) | 917 | 915 | 921 | 913 | 922 |
| (Polyethylene A)/(Polyethylene B) (weight ratio) | | 57/43 | 59/41 | 56/44 | 56/44 | 48/52 |
| Ethylene base copolymer | MFR$_5$ (g/10 minute) 5 kg | 0.30 | 0.23 | 0.26 | 0.40 | 0.35 |
| | Density d (kg/m$^3$) | 953 | 952 | 953 | 949 | 949 |
| | Molecular weight distribution (Mw/Mn) | 21.8 | 26.4 | 25.7 | 22.6 | 23.6 |
| | Boiling hexane-soluble component (wt%) | 0.36 | 0.37 | 0.39 | 0.39 | 0.68 |
| | Polydispersion index PDI | 33.5 | 40.4 | 33.4 | 26.6 | 21.1 |
| | Critical shear stress $\sigma_c$ (MPa) | 0.28 | 0.22 | 0.23 | 0.22 | 0.27 |
| | Creep distortion (%) | 65 | 75 | 80 | 160 | 185 |
| | Y component (wt%) | 5.1 | 6.0 | 5.6 | 5.8 | 1.6 |
| | log y | 0.7075 | 0.7782 | 0.7482 | 0.7634 | 0.2041 |
| | 56.80 - 0.0595d | 0.0965 | 0.1560 | 0.0965 | 0.3345 | 0.3345 |
| | Long chain branch index LCBI | 0.84 | 0.73 | 0.76 | 0.47 | 0.70 |
| | Yellow index YI | -0.2 | -0.6 | 0.0 | -0.3 | -0.2 |

EP 1 424 349 A1

Table 1 (continued)

| Film | | Example | | | Comparative Example | |
|---|---|---|---|---|---|---|
| | | 1 | 2 | 3 | 1 | 2 |
| | Tensile elastic modulus MD (MPa) | 1920 | 1940 | 1920 | 1650 | 1590 |
| | Tensile elastic modulus TD (MPa) | 1910 | 1970 | 1900 | 1600 | 1510 |
| | Film impact (kJ/m) | 32 | 32 | 33 | 30 | 30 |
| | Fish eye FE (number/1000 cm$^2$) | 20 | 50 | 30 | 150 | 30 |
| | Tear strength MD (kJ/m) | 9.5 | 12.3 | 1.6 | 4.2 | 3.6 |
| | Tear strength TD (kJ/m) | 84 | 102 | 95 | 15 | 159 |
| | High-speed moldability | ○ | ○ | ○ | × | ○ |
| | Bubble stability | ○ | ○ | ○ | ○ | ○ |
| | Extruding characteristic: screw revolution (rpm) | 70 | 73 | 69 | 85 | 96 |

As shown in Table 1 described above, in Examples 1 to 3, fish eyes (FE) are few, and the extruding characteristic is excellent. In particular, a balance between the rigidity and the tear strength is excellent. In Comparative Example 1 in which the creep distortion is large, a lot fish eyes (FE) are observed, and the tear strength and the extruding characteristic are reduced. Further, in Comparative Example 1, fish eyes (FE) are few, but the tear strength and the extruding characteristic are not improved.

As apparent from the examples described above, obtained according to the present invention are the ethylene base copolymer and the inflation film which have a high impact strength and particularly few fish eyes (FE) and which are excellent in a high extruding characteristic and a tear strength in molding.

Example 4

The same procedure as in Example 1 was carried out, except that Example 1 (2) was changed as follows.

(2) Production of ethylene base copolymer

A reaction apparatus having a content volume of 200 liter equipped with a stirrer was continuously fed with 6 kg/hour of ethylene, 17 liter/hour of hexane and 88 liter/hour of hydrogen, and the solid catalyst component described above and triethylaluminum were introduced thereinto at the speeds of 0.9 millimole/hour in terms of a titanium atom and 29.7 millimole/hour respectively to continuously react them on the conditions of a polymerizing temperature of 80°C, a polymerizing pressure (total pressure) of 4.7 kg/cm$^2$ G and a residence time of 3.5 hours.

A suspension of hexane containing the polyethylene (A) thus obtained was introduced into a deaerating bath at the same temperature to separate unreacted gases, and then the whole amount was introduced as it was into a subsequent polymerization reactor of the second stage.

The polymerization reactor of the second stage was fed with 5.7 kg/hour of ethylene, 16.2 liter/hour of hexane, 125 g/hour of 1-butene and 1.0 liter/hour of hydrogen to react them at 80°C on the conditions of a total pressure of 1.9 kg/cm$^2$ G and a residence time of 2.2 hours.

A suspension of hexane containing polyethylene thus obtained was subjected to solid-liquid separation, and the resulting solid matter was dried to obtain an ethylene base copolymer (ethylene·1-butene copolymer).

Example 5

The same procedure as in Example 1 (2) was carried out, except that in Example 1 (2), changed were a feeding amount of ethylene to 5.4 kg/hour, a feeding amount of hexane to 15.5 liter/hour, a feeding amount of 1-butene to 80 g/hour and a feeding amount of hydrogen to 0.9 liter/hour respectively in the second polymerization step. The results thereof are shown in Table 2.

Example 6

The same procedure as in Example 1 (2) was carried out, except that in Example 1 (2), changed were the aluminum component to 2.5 millimole/hour of triethylaluminum and 27.2 millimole/hour of diethylaluminum chloride and a feeding amount of hydrogen to 96.9 liter/hour respectively in the first polymerization step and a feeding amount of ethylene to 5.4 kg/hour, a feeding amount of hexane to 15.6 liter/hour, a feeding amount of 1-butene to 112 g/hour and a feeding amount of hydrogen to 0.8 liter/hour respectively in the second polymerization step. The results thereof are shown in Table 2.

Comparative Example 3

The same procedure as in Example 1 (2) was carried out, except that in Example 1 (2), changed were a feeding amount of hydrogen to 100 liter/hour in the first polymerization step and a feeding amount of ethylene to 5.5 kg/hour, a feeding amount of hexane to 15.6 liter/hour, a feeding amount of 1-butene to 111 g/hour and a feeding amount of hydrogen to 0 liter/hour respectively in the second polymerization step. The results thereof are shown in Table 2.

Comparative Example 4

The same procedure as in Example 1 (2) was carried out, except that in Example 1 (2), changed were the aluminum component to 29.7 millimole/hour of triisobutylaluminum and a feeding amount of hydrogen to 71 liter/hour respectively in the first polymerization step and a feeding amount of ethylene to 6.6 kg/hour, a feeding amount of hexane to 18.7 liter/hour, a feeding amount of 1-butene to 100 g/hour and a feeding amount of hydrogen to 1.8 liter/hour respectively in the second polymerization step. The results thereof are shown in Table 2.

Comparative Example 5

(1) Production of catalyst

A reaction bath (content volume: 5 liter) equipped with a controlling stirrer for a solid substance was sufficiently substituted with nitrogen gas and then charged with 80 g of metal magnesium, 1210 g of ethanol and 0.8 g of iodine to react them under a refluxing condition while stirring until hydrogen gas was not observed to be generated from the system. This reaction solution was dried under reduced pressure to obtain a solid product. A stainless steel-made ball mill was charged with 250 g of this solid product and 2 liter of hexane, and it was crushed for 10 hours to obtain a solid substance.

A reaction bath (content volume: 5 liter) equipped with a stirrer which was sufficiently substituted with nitrogen gas was charged with 130 g of the solid substance obtained above and 2 liter of dehydrated hexane, and 30 ml of tetra-n-butoxytitanium and 675 ml of a hexane solution (concentration: 50 % by weight) of ethylaluminum dichloride were added thereto while stirring to react them at 60°C for 2 hours. Then, a solid matter was filtered and washed with hexane to obtain a solid catalyst.

(2) Production of ethylene base copolymer

The same procedure as in Example 1 (2) was carried out, except that in Example 1 (2), changed were the solid catalyst component to 0.8 millimole/hour of that obtained in Comparative Example 5 (1) in terms of a titanium atom, the aluminum component to 26.4 millimole/hour of triisobutylaluminum and a feeding amount of hydrogen to 98 liter/hour respectively in the first polymerization step and a feeding amount of ethylene to 4.8 kg/hour, a feeding amount of hexane to 13.6 liter/hour, a feeding amount of 1-butene to 400 g/hour, a feeding amount of hydrogen to 0 liter/hour and the polymerization temperature to 70°C respectively in the second polymerization step. The results thereof are shown in Table 2.

Table 2

| | | Example | | | Comparative Example | | |
|---|---|---|---|---|---|---|---|
| | | 4 | 5 | 6 | 3 | 4 | 5 |
| (Polyethylene A) | MFR$_2$ (g/10 minute) 2.16 kg | 680 | 650 | 857 | 814 | 323 | 991 |
| | Density (kg/m$^3$) | 978 | 978 | 979 | 980 | 978 | 981 |
| | Molecular weight distribution (Mw/Mn) | 12.3 | 11.8 | 12.5 | 12.4 | 9.5 | 12.8 |
| | Melting enthalpy $\triangle$H (J/g) | 249 | 249 | 248 | 247 | 242 | 247 |
| (Polyethylene B) | Density (kg/m$^3$) | 925 | 938 | 927 | 924 | 922 | 917 |
| (Polyethylene A)/(Polyethylene B) (weight ratio) | | 51/49 | 53/47 | 52/48 | 52/48 | 48/52 | 56/44 |
| Ethylene base copolymer | MFR$_5$ (g/10 minute) 5 kg | 0.39 | 0.33 | 0.21 | 0.10 | 0.35 | 0.19 |
| | Density d (kg/m$^3$) | 952 | 959 | 954 | 953 | 949 | 947 |
| | Molecular weight distribution (Mw/Mn) | 24.3 | 25.3 | 26.0 | 27.0 | 23.6 | 31.8 |
| | Boiling hexane-soluble component (wt%) | 0.52 | 0.55 | 0.58 | 0.57 | 0.68 | 0.68 |
| | Polydispersion index PDI | 28.8 | 29.9 | 31.0 | 35.0 | 21.1 | 51.5 |
| | Critical shear stress $\sigma_c$ (MPa) | 0.28 | 0.26 | 0.23 | 0.18 | 0.27 | 0.26 |
| | Creep distortion (%) | 23 | 25 | 24 | 28 | 185 | 24 |
| | Y component (wt%) | 6.3 | 1.7 | 4.3 | 1.0 | 1.6 | 15.3 |
| | log y | 0.7993 | 0.2304 | 0.6335 | 0.000 | 0.2041 | 1.1847 |
| | 56.80 − 0.0595d | 0.156 | −0.2605 | 0.037 | 0.0965 | 0.3345 | 0.4535 |
| | Long chain branch index LCBI | 0.85 | 0.82 | 0.91 | 1.03 | 0.70 | 0.81 |
| | Yellow index YI | −0.3 | −0.2 | −0.3 | 0 | −0.2 | 0.2 |

Table 2 (continued)

| Film | | Example | | | Comparative Example | | |
|---|---|---|---|---|---|---|---|
| | | 4 | 5 | 6 | 3 | 4 | 5 |
| | Tensile elastic modulus MD (MPa) | 1820 | 2180 | 1940 | 1930 | 1590 | 1700 |
| | Tensile elastic modulus TD (MPa) | 1780 | 2150 | 1920 | 1930 | 1510 | 1730 |
| | Film impact (kJ/m) | 30 | 32 | 38 | 49 | 30 | 34 |
| | Fish eye FE (number/1000 cm$^2$) | 20 | 50 | 30 | 540 | 30 | 240 |
| | Tear strength MD (kJ/m) | 9.0 | 9.5 | 11.9 | 5.0 | 3.6 | 5.0 |
| | Tear strength TD (kJ/m) | 82 | 86 | 108 | 152 | 159 | 141 |
| | High-speed moldability | ○ | ○ | ○ | × | ○ | ○ |
| | Bubble stability | ○ | ○ | ○ | × | ○ | ○ |
| | Extruding characteristic: screw revolution (rpm) | 61 | 64 | 65 | 102 | 96 | 56 |

As shown in Table 2 described above, in Examples 4 to 6, particularly fish eyes (FE) are few, and the bubble stability and the extruding characteristic are excellent. On the other hand, in Comparative Example 3 in which the critical shear stress $\sigma_c$ is small, balance between the rigidity and the tear strength is excellent, but a lot of fish eyes (FE) are present, and the bubble stability, particularly the extruding characteristic is inferior. Further, in Comparative Example 4 in which the polydispersion index PDI is small, fish eyes (FE) are few, but the extruding characteristic is inferior. In Comparative Example 5 in which the polydispersion index PDI is small, the bubble stability and the extruding characteristic are excellent, but a lot of fish eyes (FE) are found.

As apparent from the examples described above, obtained according to the present invention are the ethylene base copolymer and the inflation film which have a high impact strength and particularly less fish eyes (FE) and which are excellent in a high extruding characteristic and a bubble stability in molding.

Example 7

The same procedure as in Example 1 was carried out, except that Example 1 (2) was changed as follows.

(2) Production of ethylene base copolymer

A reaction apparatus having a content volume of 200 liter equipped with a stirrer was continuously fed with 6 kg/hour of ethylene, 17 liter/hour of hexane and 66 liter/hour of hydrogen, and the solid catalyst component described above and triethylaluminum were introduced thereinto at the speeds of 1.0 millimole/hour in terms of a titanium atom and 33.0 millimole/hour respectively to continuously react them on the conditions of a polymerizing temperature of 80°C, a polymerizing pressure (total pressure) of 4.7 kg/cm$^2$ G and a residence time of 3.5 hours.

A suspension of hexane containing the polyethylene (A) thus obtained was introduced into a deaerating bath at the same temperature to separate unreacted gases, and then the whole amount was introduced as it was into a subsequent polymerization reactor of the second stage.

The polymerization reactor of the second stage was fed with 5.2 kg/hour of ethylene, 14.5 liter/hour of hexane, 365 g/hour of 1-butene and 0.2 liter/hour of hydrogen to react them at 80°C on the conditions of a total pressure of 1.9 kg/cm$^2$ G and a residence time of 2.2 hours.

A suspension of hexane containing polyethylene thus obtained was subjected to solid-liquid separation, and the resulting solid matter was dried to obtain an ethylene base copolymer (ethylene·1-butene copolymer).

Example 8

The same procedure as in Example 1 (2) was carried out, except that in Example 1 (2), changed were a feeding amount of hydrogen to 64 liter/hour in the first polymerization step and a feeding amount of ethylene to 4.8 kg/hour, a feeding amount of hexane to 13.6 liter/hour, a feeding amount of 1-butene to 280 g/hour and a feeding amount of hydrogen to 0.1 liter/hour respectively in the second polymerization step. The results thereof are shown in Table 3.

Example 9

The same procedure as in Example 1 (2) was carried out, except that in Example 1 (2), changed were the aluminum component to 2.8 millimole/hour of triethylaluminum and 30.2 millimole/hour of diethylaluminum chloride and a feeding amount of hydrogen to 69 liter/hour respectively in the first polymerization step and a feeding amount of ethylene to 5.4 kg/hour, a feeding amount of hexane to 15.3 liter/hour, a feeding amount of 1-butene to 338 g/hour and a feeding amount of hydrogen to 0 liter/hour respectively in the second polymerization step. The results thereof are shown in Table 3.

Comparative Example 6

The same procedure as in Example 1 (2) was carried out, except that in Example 1 (2), changed were the solid catalyst component to 0.9 millimole/hour in terms of a titanium atom, the aluminum component to 29.7 millimole/hour of triisobutylaluminum and a feeding amount of hydrogen to 55 liter/hour respectively in the first polymerization step and a feeding amount of ethylene to 4.8 kg/hour, a feeding amount of hexane to 13.6 liter/hour, a feeding amount of 1-butene to 268 g/hour and a feeding amount of hydrogen to 0.5 liter/hour respectively in the second polymerization step. The results thereof are shown in Table 3.

Comparative Example 7

(1) Production of catalyst

A reaction bath (content volume: 5 liter) equipped with a controlling stirrer for a solid substance was sufficiently substituted with nitrogen gas and then charged with 80 g of metal magnesium, 1210 g of ethanol and 0.8 g of iodine to react them under a refluxing condition while stirring until hydrogen gas was not observed to be generated from the system. This reaction solution was dried under reduced pressure to obtain a solid product. A stainless steel-made ball mill was charged with 250 g of this solid product and 2 liter of hexane, and it was crushed for 10 hours to obtain a solid substance.

A reaction bath (content volume: 5 liter) equipped with a stirrer which was sufficiently substituted with nitrogen gas was charged with 130 g of the solid substance obtained above and 2 liter of dehydrated hexane, and 30 ml of tetra-n-butoxytitanium and 675 ml of a hexane solution (concentration: 50 % by weight) of ethylaluminum dichloride were added thereto while stirring to react them at 60°C for 2 hours. Then, a solid matter was filtered and washed with hexane to obtain a solid catalyst.

(2) Production of ethylene base copolymer

The same procedure as in Example 1 (2) was carried out, except that in Example 1 (2), changed were the solid catalyst component to 0.8 millimole/hour of that obtained in Comparative Example 7 (1) in terms of a titanium atom, the aluminum component to 26.4 millimole/hour of triisobutylaluminum and a feeding amount of hydrogen to 98 liter/hour respectively in the first polymerization step and a feeding amount of ethylene to 4.8 kg/hour, a feeding amount of hexane to 13.6 liter/hour, a feeding amount of 1-butene to 400 g/hour, a feeding amount of hydrogen to 0 liter/hour and the polymerization temperature to 70°C respectively in the second polymerization step. The results thereof are shown in Table 3.

Table 3

| | | Example | | | Comparative Example | |
|---|---|---|---|---|---|---|
| | | 7 | 8 | 9 | 6 | 7 |
| (Polyethylene A) | MFR$_2$ (g/10 minute) 2.16 kg | 700 | 600 | 1021 | 50 | 991 |
| | Density (kg/m$^3$) | 979 | 979 | 980 | 977 | 981 |
| | Molecular weight distribution (Mw/Mn) | 12.4 | 11.8 | 12.7 | 9.0 | 12.8 |
| | Melting enthalpy $\triangle$H (J/g) | 248 | 247 | 248 | 234 | 247 |
| (Polyethylene B) | Density (kg/m$^3$) | 905 | 913 | 910 | 913 | 917 |
| (Polyethylene A)/(Polyethylene B) (weight ratio) | | 54/46 | 56/44 | 53/47 | 56/44 | 56/44 |
| Ethylene base copolymer | MFR$_5$ (g/10 minute) 5 kg | 0.40 | 0.33 | 0.29 | 0.40 | 0.19 |
| | Density d (kg/m$^3$) | 945 | 950 | 947 | 949 | 947 |
| | Molecular weight distribution (Mw/Mn) | 24.1 | 25.3 | 25.6 | 22.6 | 31.8 |
| | Boiling hexane-soluble component (wt%) | 0.55 | 0.54 | 0.62 | 0.39 | 0.68 |
| | Polydispersion index PDI | 29.4 | 31.0 | 28.5 | 26.6 | 51.5 |
| | Critical shear stress $\sigma_c$ (MPa) | 0.25 | 0.26 | 0.22 | 0.22 | 0.26 |
| | Creep distortion (%) | 25 | 26.0 | 23 | 160 | 24 |
| | Y component (wt%) | 16.3 | 9.3 | 14.7 | 5.8 | 15.3 |
| | log y | 1.2122 | 0.9685 | 1.1673 | 0.7634 | 1.1847 |
| | 56.80 − 0.0595d | 0.5725 | 0.2750 | 0.4535 | 0.3345 | 0.4535 |
| | Long chain branch index LCBI | 1.13 | 0.76 | 0.83 | 0.47 | 0.81 |
| | Yellow index YI | −0.2 | −0.3 | −0.2 | −0.3 | 0.2 |

Table 3 (continued)

| Film | | Example | | | Comparative Example | |
|---|---|---|---|---|---|---|
| | | 7 | 8 | 9 | 6 | 7 |
| | Tensile elastic modulus MD (MPa) | 1470 | 1740 | 1560 | 1650 | 1700 |
| | Tensile elastic modulus TD (MPa) | 1440 | 1720 | 1530 | 1600 | 1730 |
| | Film impact (kJ/m) | 46 | 38 | 47 | 30 | 34 |
| | Fish eye FE (number/1000 cm$^2$) | 90 | 60 | 70 | 150 | 240 |
| | Tear strength MD (kJ/m) | 9.1 | 9.4 | 9.8 | 4.2 | 5.0 |
| | Tear strength TD (kJ/m) | 80 | 82 | 87 | 150 | 141 |
| | High-speed moldability | ○ | ○ | ○ | × | ○ |
| | Bubble stability | ○ | ○ | ○ | ○ | ○ |
| | Extruding characteristic: screw revolution (rpm) | 58 | 59 | 65 | 85 | 56 |

As shown in Table 3 described above, in Comparative Example 6 in which the long chain branch index LCBI is small, the film is cut in inflation molding, and the extruding characteristic is not good as well. Further, in Comparative Example 7 in which the polydispersion index PDI falls out of the range, the high-speed moldability is good, and particularly the extruding characteristic is excellent. However, a lot of fish eyes (FE) are found, and the film having a low strength is obtained. In contrast with this, obtained in the examples are the films in which a balance between the rigidity and the tear strength is excellent and FE is few and which are excellent as well in a high-speed moldability and an extruding characteristic.

As apparent from the examples described above, obtained according to the present invention are the ethylene base copolymer and the inflation film which have a high impact strength and particularly less fish eyes (FE) and which are excellent in a high extruding characteristic and a high-speed moldability in molding.

INDUSTRIAL APPLICABILITY

According to the present invention, capable of being obtained is polyethylene for a film in which an impact strength is high and fish eyes are few and which is excellent in a high extruding characteristic, a high-speed moldability, a bubble stability and a tear strength particularly in molding.

**Claims**

1. An ethylene base copolymer having a density d falling in a range of 940 to 970 $kg/m^3$, a polydispersion index PDI falling in a range of 25 to 50 and a creep distortion $\gamma_0$ of 100 % or less.

2. An ethylene base copolymer having a density d falling in a range of 940 to 970 $kg/m^3$, a polydispersion index PDI falling in a range of 25 to 50 and a critical shear stress of 0.21 MPa or more.

3. An ethylene base copolymer having a density d falling in a range of 940 to 970 $kg/m^3$, a polydispersion index PDI falling in a range of 25 to 50 and a long chain branch index LCBI falling in a range of 0.6 to 2.0.

4. An ethylene base copolymer having a density d falling in a range of 940 to 970 $kg/m^3$, a polydispersion index PDI falling in a range of 25 to 50, a creep distortion $\gamma_0$ of 100 % or less, a critical shear stress of 0.21 MPa or more and a long chain branch index LCBI falling in a range of 0.6 to 2.0.

5. The ethylene base copolymer as described in any of claims 1 to 4, wherein a boiling hexane-soluble component amount is 1.0 % by weight or less.

6. The ethylene base copolymer as described in any of claims 1 to 4, wherein a relation of an amount Y (% by weight) of a component having an elution temperature of 90°C or lower obtained by a cross fractionation method and a molecular weight of 50,000 or more with a density d $(kg/m^3)$ satisfies the following equation:

$$\log Y \geqq 56.80 - 0.0595d$$

7. A production process for the ethylene base copolymer as described in any of claims 1 to 4, wherein it is produced via at least two continuous steps by a slurry polymerization method using a Ziegler catalyst.

8. The production process for the ethylene base copolymer as described in claim 7, wherein it is produced by continuous polymerization of two or more kinds of polyethylenes, and polyethylene produced at the first step has a melting enthalpy $\Delta H$ of 200 J/g or more and a molecular weight distribution (weight average molecular weight Mw/ number average molecular weight Mn) of 5 to 30.

9. The production process for the ethylene base copolymer as described in claim 7, wherein it is produced by introducing the powdery polyethylene resin obtained by polymerization into an extruding machine without being exposed even once to the air.

10. The production process for the ethylene base copolymer as described in claim 9, wherein the extruding machine is a double shaft screw extruding machine.

11. The production process for the ethylene base copolymer as described in claim 7, wherein an antioxidant is added to the powdery polyethylene resin in a proportion of 4000 ppm or less.

**12.** A film obtained by subjecting the ethylene base copolymer as described in any of claims 1 to 4 to inflation molding.

## INTERNATIONAL SEARCH REPORT

International application No.

PCT/JP02/08344

A. CLASSIFICATION OF SUBJECT MATTER
Int.Cl⁷ C08F210/02, C08F297/08, C08J5/18

According to International Patent Classification (IPC) or to both national classification and IPC

B. FIELDS SEARCHED

Minimum documentation searched (classification system followed by classification symbols)
Int.Cl⁷ C08F210/00-210/18, C08F297/00-297/08, C08J5/18

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 5-117322 A (Maruzen Polymer Kabushiki Kaisha.), 14 May, 1993 (14.05.93), Full text (Family: none) | 1-12 |
| A | JP 7-241908 A (Mitsubishi Chemical Corp.), 19 September, 1995 (19.09.95), Full text & US 5422400 A1 | 1-12 |
| A | EP 717055 A2 (MITSUBISHI CHEMICAL CORP.), 19 June, 1996 (19.06.96), Full text & JP 8-225612 A & CN 1130636 A & US 5693719 A1 & KB 269845 B | 1-12 |

☒ Further documents are listed in the continuation of Box C.　　☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 05 November, 2002 (05.11.02) | 19 November, 2002 (19.11.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

International application No.

PCT/JP02/08344

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-264246 A  (Japan Polyolefins Co., Ltd.), 06 October, 1998 (06.10.98), Full text (Family: none) | 1-12 |
| A | JP 11-71427 A  (Idemitsu Petrochemical Co., Ltd.), 16 March, 1999 (16.03.99), Full text (Family: none) | 1-12 |
| A | JP 2000-239405 A  (Japan Polyolefins Co., Ltd.), 05 September, 2000 (05.09.00), Full text (Family: none) | 1-12 |

Form PCT/ISA/210 (continuation of second sheet) (July 1998)